# EUROPÄISCHE PATENTSCHRIFT

(11) **EP 4 217 261 B1**
(45) Veröffentlichungstag und Bekanntmachung des Hinweises auf die Patenterteilung: **03.09.2025**
(21) Anmeldenummer: 21830384.0
(22) Anmeldetag: 30.09.2021
(51) Int. Cl.: B60T 7/10, B60T 11/16, B62K 23/06, B62K 23/04, B62L 3/02

(54) **HYDRAULISCHE ZWEIRADBREMSE**
HYDRAULIC BRAKE FOR TWO-WHEELED VEHICLE
FREIN HYDRAULIQUE DE DEUX-ROUES

(30) Priorität: 30.09.2020 DE 102020006209
(43) Veröffentlichungstag der Anmeldung: 02.08.2023
(73) Patentinhaber: Barjesteh, Ali, 10999 Berlin (DE)
(72) Erfinder: Barjesteh, Ali, 10999 Berlin (DE)
(86) Internationale Anmeldenummer: PCT/DE2021/000168
(87) Internationale Veröffentlichungsnummer: WO 2022/068986

(56) Entgegenhaltungen:
- WO-A1-99/06268
- DE-A1- 102010 053 009
- DE-U1- 202010 016 054
- FR-A- 343 644
- FR-A- 395 042
- US-B1- 8 151 666

## Beschreibung

Die Erfindung betrifft eine hydraulische Zweiradbremse insbesondere für Fahrräder, Mopeds, Rollatoren usw., bei denen zur Auslösung des Bremsvorganges ein Kolben in einem mit Hydraulikflüssigkeit gefüllten Zylinder zum Zwecke der Flüssigkeitsverdrängung aus dem Zylinder belastet wird.

Derartige hydraulische Zweiradbremsen sind bekannt.

So beschreibt die DE 10 2012 008 167 B4 eine Fahrradbremse, bei der ein mit der Hand am Lenker betätigbarer, auf der Lenkerstange angeordneter und um diese drehbarer Drehgriff mit einer auf ein Rad einwirkenden Bremseinrichtung verbunden ist, derart, dass bei einer Drehbewegung des Drehgriffes um die Lenkerstange als Drehachse die Bremseinrichtung betätigbar ist, wobei der Drehgriff auf einer Seite in ein an der Lenkerstange fixiertes Gehäuse umfangsseitig eingreift oder dieses Gehäuse übergreift, im Gehäuse und mit diesem verbunden ein Hydraulik-Ringzylinder-Abschnitt für eine Ringbewegung angeordnet ist, dessen Kolben mit dem Drehgriff verbunden oder verbindbar ist und der Auslass aus dem Hydraulik-Ringzylinder-Abschnitt über eine Hydraulikleitung mit der Bremseinrichtung gekoppelt ist.

Diese Erfindung wird durch die DE 10 2018 006 685 B3 dahingehend verbessert, dass die Kolbenverstellung durch einen gekrümmten Hebel oder einen Knopf vorgenommen wird.

Durch einen Knopf, auf den ein mechanischer Daumendruck vorgenommen wird, um Hydraulikflüssigkeit aus dem Zylinder zur Bremse zu leiten, wird auch die Bremse gemäß DE 44 00 641 A1 betätigt. Der Hydraulikzylinder ist hier zumindest teilweise im Handgriff angeordnet und nicht als Ringzylinder ausgebildet.

Aus der DE 20 2010 016 054 U1 ist eine Betätigungsvorrichtung für eine Bremszange, mit einem Betätigungselement und einem Hydraulikzylinder mit einem darin verlagerbaren Volumenverdrängungselement bekannt, wobei die Betätigungsvorrichtung über eine Hydraulikleitung mit der Bremszange verbindbar ist, bei der das Betätigungselement um die Längsachse des Hydraulikzylinders drehbar angeordnet ist und bei der eine Übersetzungsanordnung vorgesehen ist, die eine Drehbewegung des Betätigungselements in eine Axialbewegung des Volumenverdrängungselements wandelt.

Dabei kommen drei Gewindeabschnitte zum Einsatz, ein Gewindeteil, das mit dem Betätigungselement gekoppelt ist und seinerseits mit einem Gewindeteil des Kolbens sowie mit einem Gewindeteil innerhalb des Zylinders.

Ausdrücklich wird hier darauf hingewiesen, dass die auch teilweise Integration der Kolbenzylinder - Einheit in den Handgriff technisch aufwendig sei. So entsteht ein beträchtliches Längsgehäuse am Lenker, das auf der anderen Seite kompensiert werden muss.

DE 10 2010 053009 A1 offenbart die Merkmale des Oberbegriffes der Ansprüche 1, 3 und 8.

Aufgabe der Erfindung ist es eine optimal mit der Lenkstange kombinierbares Hydraulikbremssystem vorzuschlagen. Gelöst wird diese Aufgabe mit den Merkmalen des Anspruches 1 oder des Anspruches 3 oder des Anspruches 8. Vorteilhafte Ausgestaltungen sind Gegenstand der Unteransprüche.

Bei einer hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse durch eine Zuleitung transportierbar ist, wobei die Bewegung des Kolbens über eine Übersetzungsanordnung realisierbar ist, wird erfindungsgemäß vorgeschlagen, dass der Zylinder ein Ringzylinder oder ein Teilringzylinder ist, der auf der Lenkstange fixiert ist und der Kolben als Ringkolben oder Teilringkolben ausgebildet ist, der über eine Kolbenstange mit einer auf der Lenkstange längsverschiebbar geführten Hülse verbunden ist und die Übersetzungsanordnung ein Spindelgetriebe ist, wobei die Hülse ein Außenspindelgewinde aufweist, das mit einem Innenspindelgewinde des Drehgriffes in Eingriff steht.

Ringzylinder bedeutet, dass der Querschnitt des Zylinders durch einen Vollring gebildet ist, während bei einem Teilringzylinder des Querschnittes nur durch einen Ringabschnitt gebildet ist.

Die hydraulische Zweiradbremse zeichnet sich durch einen einfachen Aufbau aus und ist leicht zu montieren, indem die Zweiradbremse als Baugruppe einfach auf die Lenkstange geschoben und fixiert wird. Es bedarf keinerlei Veränderungen der Lenkstange, so dass deren Stabilität nicht beeinflusst wird. Lediglich der Drehgriff weist infolge des Spindelgewindes einen etwas größeren Durchmesser auf.

Die Kolbenstange besteht bei dieser Ausführung bevorzugt aus einem Zylinder mit geschlossenem Mantel oder aus kopfund stirnseitig verbundene Streben.

Bei einer noch vereinfachten Ausführung der hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse transportierbar ist, wobei die Bewegung des Kolbens über eine Übersetzungsanordnung realisierbar ist, die eine Drehbewegung in eine Axialbewegung wandelt, ist vorgesehen, dass der Zylinder ein Ringzylinder oder ein Teilringzylinder ist, der auf der Lenkstange fixiert ist und der Kolben als Ringkolben oder Teilringkolben ausgebildet ist, der mit einem Abschnitt aus dem Ringzylinder oder dem Teilringzylinder herausragt oder der über eine Kolbenstange in Zylinderform verfügt, wobei der Abschnitt oder die Kolbenstange ein Außenspindelgewinde aufweist, das mit einem Innenspindelgewinde des Drehgriffes in Eingriff steht und so die Übersetzungsanordnung bildet.

Bei einer bevorzugten Ausführung nimmt das Innenspindelgewinde des Drehgriffes die vollständige Länge des Drehgriffes ein. Der Drehgriff ist so über seine ganze Länge stabil gelagert.

Bei einer vorteilhaften Ausgestaltung weist der Ringzylinder bzw. der Teilringzylinder außen zumindest teilweise einen Ausgleichsbehälter für Hydraulikflüssigkeit auf, der mit dem Inneren des Zylinders verbunden ist.

Bei einem Teilringzylinder wird der Ausgleichsbehälter bevorzugt in dem nicht beanspruchten Raum angeordnet. Zwischen dem Ringkolben oder dem Teilringkolben und der Stirnwand des Ringzylinders ist in bekannter Weise eine Spiralfeder zur Zurückführung des Kolbens beim Lösen der Bremse angeordnet.

Erfindungsgemäß wird ferner eine hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse transportierbar ist, wobei die Bewegung des Kolbens über eine Übersetzungsanordnung realisierbar ist, die eine Drehbewegung in eine Axialbewegung wandelt, vorgeschlagen, bei der ein oder mehrere Zylinder am Umfang der Lenkstange fixiert sind, deren Kolben jeweils eine Kolbenstange aufweisen, wobei die Kolbenstangen mit einer auf der Lenkstange angeordneten, in Zylinderlängsrichtung verschiebbaren Hülse verbunden sind und die Hülse ein Außenspindelgewinde aufweist, das mit einem Innenspindelgewinde des Drehgriffes in Eingriff steht und so die Übersetzungsanordnung bildet.

Grundsätzlich funktioniert diese Zweiradbremse mit einer Kolben-Zylinder-Einheit. Vorteilhafter ist es jedoch im Hinblick auf die mit der Anordnung verbundenen Umfangsausdehnung der Lenkstange sowie der Bereitstellung der notwendigen Hydraulikflüssigkeitsmenge mehrere KolbenZylinder-Einheiten einzusetzen. Bei mehreren Zylindern lassen sich diese symmetrisch am Lenkstangenumfang anordnen und können in ihren Außenmaßen reduziert werden.

Die Hülse, die die Drehkraft der Drehgriffes in eine Längsbewegung überträgt, wird auf diese Weise auch gleichmäßiger belastet.

Bei einer vorteilhaften Ausgestaltung dieser Ausführung erfolgt die Verbindung der Kolben mit der jeweiligen Kolbenstange und/oder die Verbindung der jeweiligen Kolbenstange mit der Hülse gelenkig. Die Kopplung Spindelgewinde Kolben erhält auf diese Weise ein geringes Spiel, so dass punktuelle Belastungen vermieden werden.

Die gesamte Kraftkopplung einschließlich der Zylinder lassen sich bei entsprechenden Länge des Drehgriffes durch diesen abdecken.

Eine vorteilhafte Ausgestaltung bei allen drei Ausführungen sieht vor, dass der Drehgriff über eine Feststelleinrichtung verfügt, die vorzugsweise zwei Einstellungen aufweist: Bremse im gebremsten Zustand blockiert und Bremse im gelösten Zustand blockiert.

Erstere Einstellung dient dem Diebstahlschutz, während die zweite Einstellung für Mountainbike-Fahrer interessant sein dürfte.

Die Erfindung gemäß dem Anspruch 1 soll anhand der Zeichnung erläutert werden. Es zeigen:
- Fig. 1: Lenkstange mit Ringzylinder und
- Fig. 2: Lenkstange mit Außenzylindern.

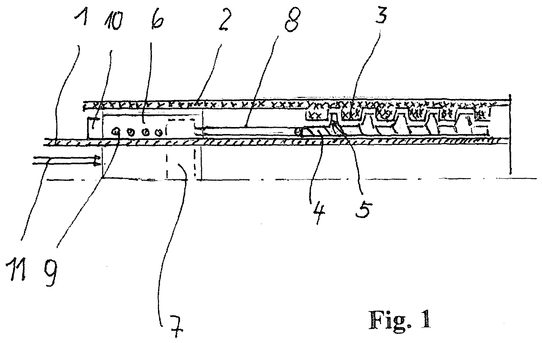

Fig. 1 zeigt eine Lenkstange 1 mit darauf montierter Zweiradbremse. Der Drehgriff 2 auf der Lenkstange 1 weist ein Innenspindelgewinde 3 auf, das mit einem Außenspindelgewinde 5 in Eingriff ist.

Das Außenspindelgewinde 5 ist Bestandteil einer Hülse 4, die gleitfähig auf der Lenkstange 1 angeordnet ist.

Durch Drehen des Drehgriffes 2 wird die Drehbewegung über das Spindelgetriebe in eine Axialbewegung der Hülse 4 gewandelt.

Die Hülse 4 weist eine Führung auf, die eine Drehbewegung ausschließt und nur die Axialbewegung zulässt. Die Führung kann als gesondertes Teil auf der Lenkstange 1 fixiert sein oder wird durch eine Verbindung mit dem Ringzylinder 6 fixiert.

Mit der Hülse 4 ist die Kolbenstange 8 verbunden, die die axiale Bewegung der Hülse 4 auf den Ringkolben 7, angeordnet im Ringzylinder 6, überträgt. Durch die Kolbenbewegung wird Hydraulikflüssigkeit aus dem Ringzylinder 6 verdrängt und gelangt über die Zuleitung 11 zur Bremse am jeweiligen Rad.

Ein Ausgleichsbehälter 10 mit Hydraulikflüssigkeit, sorgt dafür, dass sich beim Bremsen kein Unterdruck infolge des Verdrängens der Hydraulikflüssigkeit hinter dem Ringkolben 7 bildet.

Beim Bremsen wird die Spiralfeder 9 zusammengepresst und entspannt sich z. B. beim Loslassen des Drehgriffes 2 unter Zurückführung des Ringkolbens 7 seine Ruheposition.

Dabei wird gleichzeitig die Hydraulikflüssigkeit aus dem Ausgleichsbehälter 10 in diesen zurückgeführt.

Die komplette Zweiradbremse ist so konzipiert, dass sie sich auf die Lenkstange 1 aufschieben und hier fixieren lässt. Es bedarf lediglich noch den Anschluss der Zuleitung 11.

Bei der Ausführung gemäß Anspruch 3 wird auf die Hülse verzichtet. Stattdessen ist das Außenspindelgewinde 5 auf einem Abschnitt des Ringkolbens 7 oder des Teilringkolbens ausgebildet, der aus dem Ringzylinder 6 oder dem Teilringzylinder herausragt oder auf einer Kolbenstange 8 in Zylinderform.

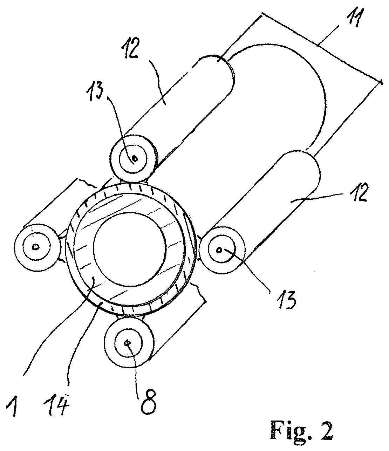

Fig. 2 zeigt das Prinzip einer Ausführung der Zweiradbremse mit außen am Umfang der Lenkstange 1 angeordneten Zylindern 12.

Die Zylinder 12 sind in geeigneter Weise auf der Lenkstange 1 fixiert. Da die Zweiradbremse auch als Nachrüstung genutzt werden soll, bietet es sich an, die Zylinder 12 auf einer Buchse 14, die über die Lenkstange 1 geschoben wird, zu positionieren und die Buchse 14 dann mit der Lenkstange 1 zu verbinden.

In der Zeichnung sind vier Zylinder 12 mit jeweils einem Kolben 13 angeordnet. Dies erfolgt symmetrisch auf den Umfang der Lenkstange 1 verteilt, wodurch die Außenmaße auf ein Minimum reduzierbar sind, und der Drehgriff 2 problemlos über die Zylinder greifen kann.

Zur Bewegung der Kolben 13 sind deren Kolbenstange 8 mit einer Hülse 4, auf der Lenkstange 1 in deren Längsrichtung verschiebbar, angeordnet, wobei die Hülse 4 ein Außenspindelgewinde 5 aufweist, das mit einem Innenspindelgewinde des Drehgriffs 2 kämmt. Das entspricht der in Fig. 1 dargestellten Funktionsweise, so dass hier auf Wiederholungen verzichtet wird.

Da die jeweiligen Kolbenstangen 8 der Zylinder 12 einen größeren Abstand zur Lenkstange 1 aufweisen können als die Verbindung der Kolbenstange 8 mit der Hülse 4, d. h. die Kolbenstangen 8 verlaufen etwas geneigt zur Lenkstange 1, sieht eine vorteilhafte Ausgestaltung vor, dass die Verbindung der Kolben 13 mit der jeweiligen Kolbenstange 8 und/oder die Verbindung der jeweiligen Kolbenstange 8 mit der Hülse 4 gelenkig erfolgt.

Die aus den einzelnen Zylindern 12 beim Bremsen herausgedrückte Hydraulikflüssigkeit wird durch ein Ventil zusammengeführt und dann in bekannter Weise zur Radbremse transportiert. Eine Rückholfeder in jedem Zylinder 12 für den jeweiligen Kolben 13 unterstützt den Rückfluss bei der Unterbrechung des Bremsvorganges, d. h. der Rückdrehung des Spindelgetriebes.

Die vorgeschlagenen Lösungen sind technisch vergleichsweise unkompliziert zur realisieren, haben eine hohe Zuverlässigkeit und sind auch für das Nachrüsten geeignet. Notwendig ist lediglich ein Sortiment, das die jeweiligen Durchmesser der Lenkstangen 1 der Hersteller von Zweiradfahrzeugen berücksichtigt und Drehgriffe mit Innenspindelgewinde umfasst.

### Bezugszeichenliste

- 1: Lenkstange
- 2: Drehgriff
- 3: Innenspindelgewinde des Drehgriffes
- 4: Hülse
- 5: Außenspindelgewinde der Hülse
- 6: Ringzylinder
- 7: Ringkolben
- 8: Kolbenstange
- 9: Spiralfeder
- 10: Ausgleichsbehälter
- 11: Zuleitung
- 12: Zylinder
- 13: Kolben
- 14: Buchse

## Patentansprüche

1. Hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse transportierbar ist, wobei die Bewegung des Kolbens über eine Übersetzungsanordnung realisierbar ist, die eine Drehbewegung in eine Axialbewegung wandelt, wobei der Zylinder ein Ringzylinder (6) oder ein Teilringzylinder ist, der auf der Lenkstange (1) fixiert ist und der Kolben als Ringkolben (7) oder Teilringkolben ausgebildet ist, der über eine Kolbenstange (8) mit einer auf der Lenkstange (1) längsverschiebbaren geführten Hülse (4) verbunden ist und die Übersetzungsanordnung ein Spindelgetriebe ist, **dadurch gekennzeichnet , dass** die Hülse (4) ein Außenspindelgewinde (5) aufweist, das mit einem Innenspindelgewinde (3) des Drehgriffes (2) in Eingriff steht.

2. Hydraulische Zweiradbremse nach Anspruch 1,
**dadurch gekennzeichnet, dass**
die Kolbenstange (8) aus einem Zylinder mit geschlossenem Mantel oder aus kopf- und stirnseitig verbundene Streben besteht.

3. Hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse transportierbar ist, wobei die Bewegung des Kolbens über eine Übersetzungsanordnung realisierbar ist, die eine Drehbewegung in eine Axialbewegung wandelt, wobei
der Zylinder ein Ringzylinder (6) oder ein Teilringzylinder ist, der auf der Lenkstange (1) fixiert ist und der Kolben als Ringkolben (7) oder Teilringkolben ausgebildet ist, der mit einem Abschnitt aus dem Ringzylinder (6) oder dem Teilringzylinder herausragt oder der über eine Kolbenstange (8) in Zylinderform verfügt,
**dadurch gekennzeichnet , dass** der Abschnitt oder die Kolbenstange (8) ein Außenspindelgewinde (5) aufweist, das mit einem Innenspindelgewinde (3) des Drehgriffes (2) in Eingriff steht und so die Übersetzungsanordnung bildet.

4. Hydraulische Zweiradbremse nach einem der Ansprüche 1 bis 3, **dadurch gekennzeichnet, dass**
der Ringzylinder (6) oder der Teilringzylinder außen zumindest teilweise einen Ausgleichsbehälter (10) aufweist, der mit dem Inneren des Ringzylinders (6) oder des Teilringzylinders verbunden ist.

5. Hydraulische Zweiradbremse nach Anspruch 4, **dadurch gekennzeichnet, dass**
bei einem Teilringzylinder im nicht in Anspruch genommenen Raum gegentiber dem Ringzylinder der Ausgleichsbehälter (10) angeordnet ist.

6. Hydraulische Zweiradbremse nach einem der Ansprüche 1 bis 5, **dadurch gekennzeichnet, dass**
zwischen dem Ringkolben (7) bzw. dem Teilringkolben und der Stirnwand des Ringzylinders (6) bzw. des Teilringzylinders eine Spiralfeder (9) zur Zurückführung des Ringkolbens (7) beim Lösen der Bremse angeordnet ist.

7. Hydraulische Zweiradbremse nach Anspruch 1, **dadurch gekennzeichnet, dass**
das Innenspindelgewinde (3) des Drehgriffes (2) die vollständige Länge des Drehgriffes (2) einnimmt.

8. Hydraulische Zweiradbremse, bei der ein Kolben in einem Zylinder, der mit einer Lenkstange verbunden ist, in Zylinderlängsrichtung durch eine Drehbewegung eines Drehgriffes auf der Lenkstange bewegbar ist, so dass zum Bremsen Hydraulikflüssigkeit aus dem Zylinder zur Radbremse transportierbar ist, wobei die Bewegung des Kolbens über eine Übersetzungsanordnung realisierbar ist, die eine Drehbewegung in eine Axialbewegung wandelt, wobei ein oder mehrere Zylinder (12) am Umfang der Lenkstange (1) fixiert sind, deren Kolben (13) jeweils eine Kolbenstange (8) aufweisen, wobei die Kolbenstangen (8) mit einer auf der Lenkstange angeordneten, in Zylinderlängsrichtung verschiebbaren Hülse (4) verbunden sind, **dadurch gekennzeichnet , dass** die Hülse (4) ein Außenspindelgewinde (5) aufweist, das mit einem Innenspindelgewinde (3) des Drehgriffes (2) in Eingriff steht und so die Übersetzungsanordnung bildet.

9. Hydraulische Zweiradbremse nach Anspruch 8, **dadurch gekennzeichnet, dass**
bei mehreren Zylindern (12) diese symmetrisch am Lenkstangenumfang angeordnet sind.

10. Hydraulische Zweiradbremse nach Anspruch 8 oder 9, **dadurch gekennzeichnet, dass**
die Verbindung der Kolben (13) mit der jeweiligen Kolbenstange (8) und/oder die Verbindung der jeweiligen Kolbenstange (8) mit der Hülse (4) gelenkig erfolgt.

11. Hydraulische Zweiradbremse nach einem der Ansprüche 1 bis 10, **dadurch gekennzeichnet, dass**
der Drehgriff (2) über eine Feststelleinrichtung verfügt, die vorzugsweise zwei Einstellungen aufweist: Bremse im gebremsten Zustand blockiert und Bremse im gelösten Zustand blockiert.

## Claims

1. A hydraulic two-wheel brake, in which a piston (7, 13) in a cylinder (6, 12), which is connected to a handlebar (1), can be moved in the longitudinal direction of the cylinder by a rotary movement of a rotary handle (2) on the handlebar (1), so that hydraulic fluid can be transported from the cylinder (6, 12) to the wheel brake for braking, wherein the movement of the piston (7, 13) can be implemented via a transmission arrangement which converts a rotary movement into an axial movement, **characterized in that** the cylinder (6) is a ring cylinder or a partial ring cylinder which is fixed on the handlebar (1) and the piston (7) is designed as a ring piston or partial ring piston which is connected via a piston rod (8) to a sleeve (4) which is guided in a longitudinally sliding manner on the handlebar (1) and the transmission arrangement is a spindle gear, wherein the sleeve (4) has an external spindle thread (5) which engages with an internal spindle thread (3) of the rotary handle (2).

2. The hydraulic two-wheel brake according to claim 1, **characterized in that** the piston rod (8) consists of a cylinder with a closed casing or of struts connected at the head and front sides.

3. A hydraulic two-wheel brake, in which a piston (7, 13) in a cylinder (6, 12) which is connected to a handlebar (1) can be moved in the longitudinal direction of the cylinder by a rotary movement of a rotary handle (2) on the handlebar (1), so that hydraulic fluid can be transported from the cylinder (6, 12) to the wheel brake for braking, wherein the movement of the piston (7, 13) can be implemented via a transmission arrangement which converts a rotary movement into an axial movement, **characterized in that** the cylinder (6) is a ring cylinder or a partial ring cylinder which is fixed on the handlebar (1) and the piston (7) is designed as a ring piston or partial ring piston which protrudes with a portion from the ring cylinder or partial ring cylinder or which is provided with a cylindrical piston rod (8), wherein the portion or the piston rod (8) has an external spindle thread (5) which engages with an internal spindle thread (3) of the rotary handle (2) and thereby forms the transmission arrangement.

4. The hydraulic two-wheel brake according to any one of claims 1 to 3, **characterized in that** the ring cylinder or the partial ring cylinder has a compensation tank (10), at least partially on the outside, which is connected to the interior of the ring cylinder or the partial ring cylinder.

5. The hydraulic two-wheel brake according to claim 4, **characterized in that** in the case of a partial ring cylinder, the compensation tank (10) is arranged in the unclaimed space with respect to the ring cylinder.

6. The hydraulic two-wheel brake according to any one of claims 1 to 5, **characterized in that** a spiral spring (9) for returning the annular piston when the brake is released is arranged between the annular piston or partial annular piston and the end wall of the annular cylinder or the partial annular cylinder.

7. The hydraulic two-wheel brake according to claim 1, **characterized in that** the internal spindle thread (3) of the rotary handle (2) occupies the entire length of the rotary handle (2).

8. A hydraulic two-wheel brake, in which a piston (13) in a cylinder (12), which is connected to a handlebar (1), can be moved in the longitudinal direction of the cylinder by a rotary movement of a rotary handle (2) on the handlebar (1), so that hydraulic fluid can be transported from the cylinder (12) to the wheel brake for braking, wherein the movement of the piston (13) can be implemented via a transmission arrangement which converts a rotary movement into an axial movement, **characterized in that** one or more cylinders (12) are fixed to the circumference of the handlebar (1), the pistons (13) of which each have a piston rod (8), wherein the piston rods (8) are connected to a sleeve (4) arranged on the handlebar (1) and slidable in the longitudinal direction of the cylinder, and the sleeve (4) has an external spindle thread (5) which engages with an internal spindle thread (3) of the rotary handle (2) and thereby forms the transmission arrangement.

9. The hydraulic two-wheel brake according to claim 8, **characterized in that**, in the case of multiple cylinders (12), these are arranged symmetrically on the handlebar circumference.

10. The hydraulic two-wheel brake according to claim 8 or 9, **characterized in that** the connection of the pistons (13) to the respective piston rod (8) and/or the connection of the respective piston rod (8) to the sleeve (4) is articulated.

11. The hydraulic two-wheel brake according to any one of claims 1 to 10, **characterized in that** the rotary handle (2) has a locking device which preferably has two settings: brake blocked in the braked state and brake blocked in the released state.

## Revendications

1. Frein hydraulique pour deux-roues, dans lequel un piston (7, 13) peut être déplacé dans un cylindre (6, 12) qui est relié à un guidon (1) dans le sens longitudinal du cylindre par un mouvement rotatif d'une poignée rotative (2) sur le guidon (1), de sorte que le fluide hydraulique peut être transporté du cylindre (6, 12) jusqu'au frein de roue pour le freinage, dans lequel le mouvement du piston (7, 13) peut être réalisé par l'intermédiaire d'un agencement de translation qui convertit un mouvement rotatif en un mouvement axial, **caractérisé en ce que** le cylindre (6) est un cylindre annulaire ou un cylindre annulaire partiel qui est fixé sur le guidon (1) et le piston (7) est réalisé sous forme de piston annulaire ou de piston annulaire partiel, qui est relié par une tige de piston (8) à un manchon guidé (4) qui peut être déplacé longitudinalement sur le guidon (1) et l'agencement de translation est un engrenage à broche, dans lequel le manchon (4) présente un filetage de broche externe (5) qui vient en prise avec un filetage de broche interne (3) de la poignée rotative (2).

2. Frein hydraulique pour deux-roues selon la revendication 1, **caractérisé en ce que** la tige de piston (8) est constituée d'un cylindre à chemise fermée ou d'entretoises reliées en tête et à l'avant.

3. Frein hydraulique pour deux-roues, dans lequel un piston (7, 13) peut être déplacé dans un cylindre (6, 12), qui est relié à un guidon (1), dans le sens longitudinal du cylindre par un mouvement rotatif d'une poignée rotative (2) sur le guidon (1), de sorte que le fluide hydraulique peut être transporté du cylindre (6, 12) jusqu'au frein de roue pour le freinage, dans lequel le mouvement du piston (7, 13) peut être réalisé par l'intermédiaire d'un agencement de translation qui convertit un mouvement rotatif en un mouvement axial, **caractérisé en ce que** le cylindre (6) est un cylindre annulaire ou un cylindre annulaire partiel qui est fixé sur le guidon (1) et le piston (7) est réalisé sous forme de piston annulaire ou de piston annulaire partiel, qui dépasse d'une section du cylindre annulaire ou du cylindre annulaire partiel ou qui présente une tige de piston (8) en forme de cylindre, dans lequel la section ou la tige de piston (8) présente un filetage de broche externe (5) qui vient en prise avec un filetage de broche interne (3) de la poignée rotative (2) et forme ainsi l'agencement de translation.

4. Frein hydraulique pour deux-roues selon l'une des revendications 1 à 3, **caractérisé en ce que** le cylindre annulaire ou le cylindre annulaire partiel présente au moins partiellement un vase d'expansion (10) à l'extérieur, qui est relié à l'intérieur du cylindre annulaire ou du cylindre annulaire partiel.

5. Frein hydraulique pour deux-roues selon la revendication 4, **caractérisé en ce que**, dans le cas d'un cylindre annulaire partiel, le vase d'expansion (10) est disposé dans l'espace inutilisé en face du cylindre annulaire.

6. Frein hydraulique pour deux-roues selon l'une des revendications 1 à 5, **caractérisé en ce qu'**un ressort spiral (9) est disposé pour rappeler le piston annulaire lorsque le frein est relâché entre le piston annulaire ou le piston annulaire partiel et la paroi d'extrémité du cylindre annulaire ou du cylindre annulaire partiel.

7. Frein hydraulique pour deux-roues selon la revendication 1, **caractérisé en ce que** le filetage de broche interne (3) de la poignée rotative (2) occupe toute la longueur de la poignée rotative (2).

8. Frein hydraulique pour deux-roues, dans lequel un piston (13) peut être déplacé dans un cylindre (12), qui est relié à un guidon (1), dans le sens longitudinal du cylindre par un mouvement rotatif d'une poignée rotative (2) sur le guidon (1), de sorte que le fluide hydraulique peut être transporté du cylindre (12) jusqu'au frein de roue pour le freinage, dans lequel le mouvement du piston (13) peut être réalisé par l'intermédiaire d'un agencement de translation qui convertit un mouvement rotatif en un mouvement axial, **caractérisé en ce qu'**un ou plusieurs cylindres (12), dont les pistons (13) présentent chacun une tige de piston (8), sont fixés sur la circonférence du guidon (1), dans lequel les tiges de piston (8) sont reliées à un manchon (4) disposé sur le guidon (1) et déplaçable dans le sens longitudinal du cylindre et le manchon (4) présente un filetage de broche externe (5) qui vient en prise avec un filetage de broche interne (3) de la poignée rotative (2) et forme ainsi l'agencement de translation.

9. Frein hydraulique pour deux-roues selon la revendication 8, **caractérisé en ce que**, en cas de présence de plusieurs cylindres (12), ceux-ci sont disposés symétriquement sur la circonférence du guidon.

10. Frein hydraulique pour deux-roues selon la revendication 8 ou 9, **caractérisé en ce que** la liaison des pistons (13) avec la tige de piston respective (8) et/ou la liaison de la tige de piston respective (8) avec le manchon (4) s'effectue de manière articulée.

11. Frein hydraulique pour deux-roues selon l'une des revendications 1 à 10, **caractérisé en ce que** la poignée rotative (2) comporte un dispositif de verrouillage qui présente de préférence deux réglages : frein bloqué à l'état freiné et frein bloqué à l'état desserré.
